# EUROPEAN PATENT APPLICATION

(11) **EP 4 047 937 A1**
(43) Date of publication of application: **24.08.2022**
(21) Application number: 20876307.8
(22) Date of filing: 17.08.2020
(51) Int. Cl.: H04N 21/2662, H04N 21/4402, H04N 21/442, H04N 21/258

(54) **INITIAL BIT RATE DETERMINING METHOD AND APPARATUS, ELECTRONIC DEVICE AND STORAGE MEDIUM**

(30) Priority: 17.10.2019 CN 201910987073
(71) Applicant: Beijing Dajia Internet Information Technology Co., Ltd., Beijing 100085 (CN)
(72) Inventor: ZHOU, Chao, Beijing 100085 (CN); LIU, Yuxin, Beijing 100085 (CN)
(74) Representative: Mathys & Squire
(86) International application number: PCT/CN2020/109568
(87) International publication number: WO 2021/073244

(57) **Abstract**

The present disclosure relates to the technical field of streaming media transmission, and provides an initial bit rate determining method and apparatus, an electronic device, and a storage medium, for solving the problem of the exiting improper method of using bit rate at a fixed level as the initial bit rate. The method of the present disclosure comprises: when a video player starts playback, determining a target bit rate according to video playback parameters used by the video player to play back a video last time; and using the target bit rate as the initial bit rate for the video played back by the video player currently, wherein the video playback parameters comprise at least one type of playback parameters among video bit rate, video resolution, and download bandwidth. The use of the initial bit rate selected according to the technical solution of the present disclosure to play back videos can satisfy individual needs of users, adapt to the usage habits of users, and in addition, eliminate the trouble of manual adjustment when a fixed bit rate is not suitable to play back a video for users, and improve user experience.

## Description

### Cross reference to related applications

The present disclosure claims priority to Chinese Patent Application No. 201910987073.7 filed to China National Intellectual Property Administration on October 17, 2019, entitled "INITIAL BIT RATE DETERMINING METHOD AND APPARATUS, ELECTRONIC DEVICE AND STORAGE MEDIUM", the entire contents of which are incorporated herein by reference.

### Field

The present disclosure relates to the technical field of streaming media transmission, in particular to an initial bit rate determining method and apparatus, an electronic device and a storage medium.

### Background

In recent years, with rapid development, video services have played an important part in people's Internet surfing time and network traffic. On a consumer side, video lag and clarity greatly affect a user's consumption experience.

In order to cope with various types of network conditions, multi-bit rate adaptation is an effective way. In a multi-bit rate adaptation strategy, an optimal bit rate grade will be dynamically selected for the user according to a state of a network, so as to find the best compromise between lag and clarity. However, in a multi-bit rate selection strategy, there is a special state, that is, the selection of an initial bit rate. The inventor realized that at an initial moment, the multi-bit rate strategy cannot obtain any state information of the network, and uses a fixed-grade bit rate as the initial bit rate. The fixed-grade bit rate may generally be the lowest bit rate or the highest bit rate. However, using a fixed bit rate as the initial bit rate for video playback may not meet the user's needs, and the user needs to manually adjust a video bit rate. Therefore, a current manner of using the fixed-grade bit rate as the initial bit rate is not reasonable enough.

### Summary

The present disclosure provides an initial bit rate determining method and apparatus, an electronic device and a storage medium, so as to at least solve the problem that a current manner of using a fixed-grade bit rate as an initial bit rate is not reasonable enough. A technical solution of the present disclosure is as follows.

According to a first aspect of embodiments of the present disclosure, a method for determining an initial bit rate is provided and includes:
determining, in a condition that a video player starts playback, a target bit rate according to a video playback parameter used by the video player to play a video last time; and
determining the target bit rate as an initial bit rate for a video played back by the video player currently;
the video playback parameter includes at least one type of playback parameters among a video bit rate, a video resolution, and a download bandwidth.

According to a second aspect of the embodiments of the present disclosure, an apparatus for determining initial bit rate is provided and includes:
a determining module, configured to determine, in a condition that a video player starts playback, a target bit rate according to a video playback parameter used by the video player to play a video last time; and
a processing module, configured to use the target bit rate as an initial bit rate for a video played back by the video player currently.

According to a third aspect of the embodiments of the present disclosure, an electronic device is provided and includes:
a memory, configured to store an executable instruction; and
a processor, configured to read and execute the executable instruction stored in the memory, so as to realize any initial bit rate determining method according to the first aspect of the embodiment of the present disclosure.

According to a fourth aspect of the embodiments of the present disclosure, a non-transitory computer storage medium is provided. When an instruction in the storage medium is executed by a processor of an initial bit rate determining apparatus, the initial bit rate determining apparatus executes any initial bit rate determining method according to the first aspect of the embodiment of the present disclosure.

The technical solution provided by the embodiments of the present disclosure at least has the following beneficial effects:
because in the embodiments of the present disclosure, the initial bit rate for the video played back currently is determined according to the playback parameter used to play back the video last time, instead of fixedly selecting a default value. Therefore, a suitable initial bit rate can be selected for video playback, which can meet individualized needs of a user, accord with usage habits of the user, and at the same time, omit a trouble that the user needs to adjust manually when a fixed bit rate is not suitable to play back a video, thus improving a user experience.

### Brief Description of the Drawings

FIG. 1 is a flow chart of a method for determining an initial bit rate illustrated according to an exemplary embodiment.
FIG. 2 is a flow chart of a method for determining an initial bit rate taking a video playback parameter being a video bit rate as an example illustrated according to an exemplary embodiment.
FIG. 3 is a flow chart of a method for determining an initial bit rate taking a video playback parameter being a video resolution as an example illustrated according to an exemplary embodiment.
FIG. 4 is a flow chart of a method for determining an initial bit rate taking a video playback parameter being a bandwidth as an example illustrated according to an exemplary embodiment.
FIG. 5 is a flow chart of a method for determining an initial bit rate taking video playback parameters being a video bit rate and a video resolution as an example illustrated according to an exemplary embodiment.
FIG. 6 is a block diagram of an apparatus for determining initial bit rate illustrated according to an exemplary embodiment.
FIG. 7 is a block diagram of an electronic device for determining initial bit rate illustrated according to an exemplary embodiment.
FIG. 8 is a schematic structural diagram of a terminal illustrated according to an exemplary embodiment.

### Detailed Description of the Embodiments

In order to make those of ordinary skill in the art better understand the technical solutions of the application, the technical solutions in the embodiments of the present disclosure will be described clearly and completely below with reference to the accompanying drawings.

Some words that appear in the text are explained below.
1. The term "and/or" in the embodiments of the present disclosure describes an association relationship between associated objects, indicating that three relationships may exist. For example, A and/or B may indicate three situations that A exists alone, A and B exist simultaneously, and B exists alone. The character "/" generally indicates that the associated objects are an "or" relationship.
2. The term "video bit rate" in the embodiments of the present disclosure refers to the quantity of bits of data transmitted per unit of time during data transmission, and a generally adopted unit is kbps, that is, kilobits per second.
3. The term "video resolution" in the embodiments of the present disclosure is a parameter used to measure the amount of data in an image. The higher the video resolution is, the clearer the video image is.
4. The term "bandwidth" in the embodiments of the present disclosure refers to the amount of data that can pass through a link per unit of time.

Determination of an initial bit rate is mainly used in various video players, and when it is detected that a video player starts to play back a video, the initial bit rate for playing back the video is determined. In the prior art, an initial bit rate selected when the video player starts to play back a video is a preset default value, and the default value is selected as the initial bit rate every time a user turns on the video player to play back the video. When the initial bit rate is used to play back the video, in case of video lag or lower clarity, the user needs to manually adjust and select a suitable bit rate for playback, which is troublesome.

For example, assuming that the preset default value of the initial bit rate of the video player is 2Mbps, when the user turns on the video player and uses the video player to play back the video, the video is played back according to the preset initial bit rate of 2Mbps, but in case of video lag or difficult video loading during video playback with the video bit rate of 2Mbps, the user needs to manually adjust the bit rate to a smaller video bit rate, such as 1Mbps; or if an image picture is not clear enough when the video bit rate of 2Mbps is used for playback, the user needs to manually adjust the bit rate to a larger video bit rate, such as 4Mbps.

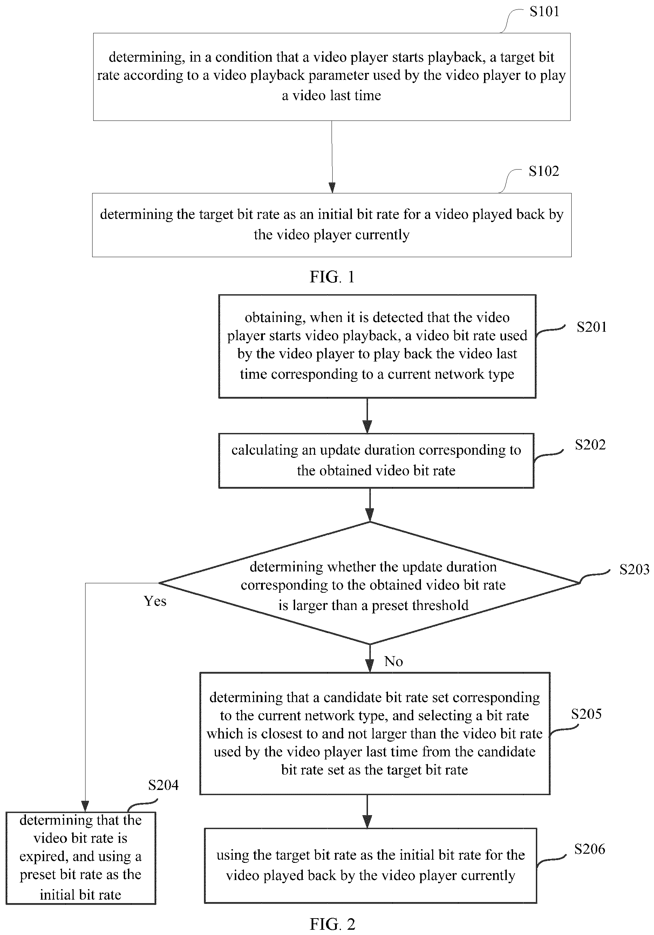

Considering the problem that a current manner of using a fixed-grade bit rate as the initial bit rate is not reasonable enough, the present disclosure provides a method for determining an initial bit rate. As shown in FIG. 1, FIG. 1 is a flow chart of a method for determining an initial bit rate illustrated according to an exemplary embodiment. The method includes the following steps:
S101, determining, in a condition that a video player starts playback, a target bit rate according to a video playback parameter used by the video player to play a video last time;
S102, determining the target bit rate as an initial bit rate for a video played back by the video player currently.

According to the method for determining an initial bit rate provided by the embodiments of the present disclosure, when it is detected that the video player starts playback, the target bit rate is determined as the initial bit rate for the video played back currently according to the playback parameter used by the video player to play back the video last time. Compared with the prior method where a default value is used as an initial bit rate, because in the embodiments of the present disclosure, the initial bit rate for the video played back currently is determined according to the playback parameter used to play back the video last time, instead of fixedly selecting a default value, a suitable initial bit rate can be selected for video playback, which can meet individualized needs of a user, accord with usage habits of the user, and at the same time, omit a trouble that the user needs to adjust manually when a fixed bit rate is not suitable to play back a video, thus improving a user experience.

In one possible implementation, the embodiments of the present disclosure determines the video playback parameters used by the video player to play back the video last time according to the following manner:
determining, according to a type of a network currently accessed, a target playback parameter used by the video player during a process in which the video player plays the video last time in a condition that the network is accessed; and determining the target playback parameter as the video playback parameter used by the video player to play back the video last time.

The type of the network currently accessed may include 3G, 4G, Wi-Fi, or others. According to a type of the network accessed by a terminal where a current video player is located, the target playback parameter used by the video player to play back the video last time under the type of the network is determined, and the target playback parameter is used as the video playback parameter used by the video player to play back the video last time.

In one possible implementation, the embodiments of the present disclosure may store playback parameter used last time under each network type, which may be stored in a form of data sheet. Each type of the network corresponds to one data sheet, and the data sheet may include a type of a network, playback parameter update time, and a playback parameter.

For example, to take the types of the network including 3G, 4G, Wi-Fi, or others as an example, data sheets corresponding to the playback parameters used last time under different types of a network are shown in Table 1:

**Table 1.**

| Network type | Playback parameter | Playback parameter update time |
|---|---|---|
| 3G | Playback parameter a | 20190810 |
| 4G | Playback parameter b | 20190812 |
| Wi-Fi | Playback parameter c | 20190809 |
| Others | Playback parameter d | 20190811 |

The video playback parameter used by the embodiments of the present disclosure for video playback include but is not limited to: a video bit rate, a video resolution, and a download bandwidth.

It should be noted that, under each type of the network, after the playback parameter used in a video playback process is changed, the changed playback parameter is updated to the data sheet, and update time of the playback parameter is updated in the data sheet as well.

In one possible implementation, after determining the type of the network currently accessed, the target playback parameter used by the video player to play back the video last time in the condition that the network is accessed is determined according to the following manners:
Manner 1: in response to that the playback parameter used by the video player during the process in which the video player plays the video last time is not changed, determining the video playback parameter used by the video player to play back the video last time as the target playback parameter.

If only one type of playback parameter is used by the video player to play back the video last time, the playback parameter is used as the target playback parameter; and accordingly, a playback parameter corresponding to the type of the network used for the video played back last time stored in the data sheet may be used as the target playback parameter.

For example, the video player does not switch the playback parameter used by the video player during the process in which the video player plays the video last time, and the playback parameter includes the video resolution, the video bit rate, and the bandwidth. Assuming that a video resolution of 720p, a video bit rate of 2Mbps, and a bandwidth of 2Mbps have been used to play back the video last time, after exiting a current video playback, the playback parameter in the data sheet is updated, and time of existing the last video playback is used as the update time of the playback parameter; and the video resolution of 720p, the video bit rate of 2Mbps, and the bandwidth of 2Mbps are used the target playback parameter.

Manner 2: determining, in response to that the playback parameter used by the video player to play back the video last time is changed, a duration that each playback parameter is used by the video player during the process in which the video player plays the video last time, and using a playback parameter with a longest duration as the target playback parameter.

It should be noted that, when the playback parameter used in the last video playback process is stored, all playback parameters used in the last video playback process may be stored.

In a condition that the video is played back currently, the duration that each playback parameter is used by the video player to play back the video last time is determined, the playback parameter with the longest duration is selected from all stored playback parameters used in the last video playback process, and the playback parameter with the longest duration is used as the target playback parameter.

For example, in the last video playback process, a duration of using the video bit rate of 2Mbps for video playback is 35 minutes, and a duration of using the video bit rate of 4Mbps for video playback is 5 minutes. The video bit rate of 2Mbps and the video bit rate of 4Mbps are both stored, and when the video is played back currently, the video bit rate of 2Mbps is used as the target playback parameter.

Manner 3: in response to that the playback parameter used by the video player during the process in which the video player plays the video last time is changed, playback parameter used by the video player at a moment of exiting the video played back last time is used as the target playback parameter.

In implementation, the playback parameter used for the video played back currently is obtained at the moment when the video player exists the video played back last time, and the playback parameter used last time in the data sheet is updated according to the obtained playback parameter.

When the target playback parameter needs to be determined, the playback parameter stored in the data sheet is obtained as the target playback parameter, and the update time of the playback parameter is the time of exiting the video played back last time.

When the target bit rate is determined according to the video playback parameter used by the video player to play back the video last time, a candidate parameter set corresponding to the video player further needs to be determined.

In one possible implementation, the candidate parameter set corresponding to the video player is determined according to the following manner:
Manner 1: when the playback parameter includes the video bit rate, a candidate bit rate set corresponding to the currently accessed network type is determined according to a preset correspondence relationship between a type of a network and a candidate bit rate set, and the candidate bit rate set corresponding to the currently accessed network type is used as a candidate parameter set corresponding to the playback parameter.

For example, a first candidate bit rate set corresponding to a 3G network may be {1Mbps}, a second candidate bit rate set corresponding to a 4G network may be {1Mbps, 2Mbps}, a third candidate bit rate set corresponding to a Wi-Fi network may be {1Mbps, 2Mbps, 4Mbps}, and a fourth candidate bit rate set corresponding to an others network may be {1Mbps, 2Mbps}.

Manner 2: when the playback parameter includes the video resolution, a candidate resolution set, corresponding to the type of the network currently accessed, is determined according to a preset correspondence relationship between the type of the network and a candidate resolution set, and the candidate resolution set corresponding to the type of the network currently accessed is used as the candidate parameter set corresponding to the playback parameter.

For example, a first candidate resolution set corresponding to the 3G network may be {540p}, a second candidate resolution set corresponding to the 4G network may be {540p, 720p}, a third candidate resolution set corresponding to the Wi-Fi network may be {540p, 720p, 1080p}, and a fourth candidate resolution set corresponding to the others network may be {540p, 720p}.

Manner 3: when the playback parameter includes the video resolution, a candidate bit rate set corresponding to the type of the network currently accessed is determined according to a correspondence relationship between the type of the network and the candidate bit rate set; a candidate resolution set corresponding to the candidate bit rate set is determined according to a correspondence relationship between the video bit rate and the video resolution; and the candidate resolution set is used as the candidate parameter set corresponding to the playback parameter.

For example, the first candidate bit rate set corresponding to the 3G network may be {1Mbps}, the second candidate bit rate set corresponding to the 4G network may be {1Mbps, 2Mbps}, the third candidate bit rate set corresponding to the Wi-Fi network may be {1Mbps, 2Mbps, 4Mbps}, and the fourth candidate bit rate set corresponding to the others network may be {1Mbps, 2Mbps}. According to the correspondence relationship between the video bit rate and the video resolution, it may be determined that the first candidate resolution set corresponding to the 3G network may be {540p}, the second candidate resolution set corresponding to the 4G network may be {540p, 720p}, the third candidate resolution set corresponding to the Wi-Fi network may be {540p, 720p, 1080p}, and the fourth candidate resolution set corresponding to the others network may be {540p, 720p}.

Manner 4: when the playback parameter includes the download bandwidth, a candidate bandwidth set corresponding to the type of the network currently accessed is determined according to a preset correspondence relationship between the type of the network and a candidate bandwidth set; and the candidate bandwidth set corresponding to the type of the network currently accessed is used as the candidate parameter set corresponding to the playback parameter.

For example, a first candidate bandwidth set corresponding to the 3G network may be {1Mbps}, a second candidate bandwidth set corresponding to the 4G network may be {1Mbps, 2Mbps}, a third candidate bandwidth set corresponding to the Wi-Fi network may be {1Mbps, 2Mbps, 4Mbps}, and a fourth candidate bandwidth set corresponding to the others network may be {1Mbps, 2Mbps}.

Manner 5: when the playback parameter includes the download bandwidth, the candidate bit rate set corresponding to the type of the network currently accessed is determined according to the preset correspondence relationship between the type of the network and the candidate bit rate set; a candidate bandwidth set corresponding to the candidate bit rate set is determined according to a correspondence relationship between the video bit rate and the download bandwidth; and the candidate bandwidth set is used as the candidate parameter set corresponding to the playback parameter.

For example, the first candidate bit rate set corresponding to the 3G network may be {1Mbps}, the second candidate bit rate set corresponding to the 4G network may be {1Mbps, 2Mbps}, the third candidate bit rate set corresponding to the Wi-Fi network may be {1Mbps, 2Mbps, 4Mbps}, and the fourth candidate bit rate set corresponding to the others network may be {1Mbps, 2Mbps}. According to the correspondence relationship between the video bit rate and the download bandwidth, it may be determined that the first candidate bandwidth set corresponding to the 3G network may be {1Mbps}, the second candidate bandwidth set corresponding to the 4G network may be {1Mbps, 2Mbps}, the third candidate bandwidth set corresponding to the Wi-Fi network may be {1Mbps, 2Mbps, 4Mbps}, and the fourth candidate bandwidth set corresponding to the others network may be {1Mbps, 2Mbps}.

In the embodiments of the present disclosure, the target bit rate is determined according to the playback parameter used by the video player to play back the video last time, and the target bit rate is used as the initial bit rate for the video played back currently.

Two conditions of the video playback parameter including one type of playback parameters and at least two types of playback parameters are respectively described below.

I. The video playback parameter includes one type of playback parameter.
determining, in response to that the video playback parameter includes one type of playback parameter, a candidate parameter set corresponding to the playback parameter according to the type of playback parameter; and selecting a target parameter, which is closest to and not larger than the playback parameter, from the candidate parameter set, and determining the target bit rate according to the target parameter.

In a condition that the video playback parameter includes the video bit rate, the candidate parameter set is the candidate bit rate set; or in a condition that the video playback parameter includes the video resolution, the candidate parameter set is the candidate resolution set; or in a condition that the video playback parameter includes the download bandwidth, the candidate parameter set is the candidate bandwidth set.

After the target bit rate is determined, the target bit rate is used as the initial bit rate used by the video player to play back the video currently.

Accordingly, the initial bit rate may be determined through the following manners.

Manner 1: if the video playback parameter includes the video bit rate, a target bit rate which is closest to and not larger than the video bit rate used by the video player last time is selected from the candidate bit rate set corresponding to the video player, and the target bit rate is used as the initial bit rate used by the video player to play back the video currently.

For example, assuming that the candidate bit rate set corresponding to the video player is {1Mbps, 2Mbps, 4Mbps}, the video bit rate in the video playback parameter used by the video player to play back the video last time is 1Mbps, the target bit rate which is the closest approximation to and not larger than the video bit rate used by the video player last time is determined to be 1Mbps, and the initial bit rate used by the video player to play back the video currently is determined to be 1Mbps.

Manner 2: if the video playback parameter includes the video resolution, a target resolution which is closest to and not larger than a video resolution used by the video player last time is selected from the candidate resolution set corresponding to the video player, a video bit rate corresponding to the target resolution is used as the target bit rate, and the target bit rate is used as the initial bit rate used by the video player to play back the video currently.

For example, assuming that the candidate resolution set corresponding to the video player is {540p, 720p, 1080p}, the video resolution in the video playback parameter used by the video player to play back the video last time is 720p, the target resolution which is the closest approximation to and not larger than the video resolution used by the video player last time selected from the candidate resolution set is 720p, and the bit rate of 2Mbps corresponding to the target resolution of 720p is used as the target bit rate, so the initial bit rate used by the video player to play back the video currently is determined to be 2Mbps.

Manner 3: if the video playback parameter includes the download bandwidth, a target bandwidth which is closest to and not larger than a download bandwidth used by the video player last time is selected from the candidate bandwidth set corresponding to the video player, a video bit rate corresponding to the target bandwidth is used as the target bit rate, and the target bit rate is used as the initial bit rate used by the video player to play back the video currently.

For example, assuming that the candidate bandwidth set corresponding to the video player is {1Mbps, 2Mbps, 4Mbps}, the download bandwidth in the playback parameters used by the video player to play back the video last time is 5Mbps, the target bandwidth not larger than the download bandwidth used by the video player last time selected from the candidate bandwidth set is 4Mbps, and the video bit rate of 4Mbps corresponding to the target bandwidth of 4Mbps is used as the target bit rate, so the initial bit rate used by the video player to play back the video currently is determined to be 4Mbps.

II. The video playback parameters include at least two types of playback parameters.

In a condition that the video playback parameter includes at least two types of playback parameter, for each type of parameter, determining a candidate parameter set corresponding to the playback parameter according to the type of the playback parameter; and selecting a target parameter which is closest to and not larger than the playback parameter from the candidate parameter set corresponding to the playback parameter, and determining the target bit rate according to the target parameter.

The using the target bit rate as the initial bit rate for the video played back by the video player currently includes:
using a smallest bit rate in at least two target bit rates as the initial bit rate for the video played back by the video player currently.

In a condition that the video playback parameter includes the video bit rate, the candidate parameter set is the candidate bit rate set; or in a condition that the video playback parameter includes the video resolution, the candidate parameter set is the candidate resolution set; or in a condition that the video playback parameter includes the download bandwidth, the candidate parameter set is the candidate bandwidth set.

Accordingly, the video playback parameter includes at least two playback parameters, and according to different types of the playback parameter, the initial bit rate for the video played back by the video player currently may be determined through the following manners:
Manner 1: if the video playback parameter include the video bit rate and the video resolution, a first target bit rate which is closest to and not larger than the video bit rate used by the video player last time is selected from the candidate bit rate set corresponding to the video player, a target resolution which is closest to and not larger than the video resolution used by the video player last time is selected from the candidate resolution set, a video bit rate corresponding to the target resolution is used as a second target bit rate, scales of the first target bit rate and the second target bit rate are compared, and a smallest video bit rate between the first target bit rate and the second target bit rate is selected as the initial bit rate for the video played back by the video player currently.

For example, assuming that the candidate bit rate set corresponding to the video player is {1Mbps, 2Mbps, 4Mbps}, and that the candidate resolution set corresponding to the video player is {540p, 720p, 1080p}, the video bit rate in the playback parameters used by the video player to play back the video last time is 1Mbps, and the video resolution is 576p; the first target bit rate which is the closest approximation to and not larger than the video bit rate used by the video player last time selected from the candidate bit rate set is 1Mbps, the target resolution closest to and not larger than the video resolution used by the video player last time selected from the candidate resolution set is 540p, and the second target bit rate corresponding to the target resolution of 540p is 1Mbps; and the smallest video bit rate of 1Mbps between the first target bit rate and the second target bit rate is used as the initial bit rate for the video played back by the video player currently.

Manner 2: if the video playback parameter includes the video bit rate and the bandwidth, the first target bit rate which is closest to and not larger than the video bit rate used by the video player last time is selected from the candidate bit rate set corresponding to the video player, the target bandwidth which is closest to and not larger than the download bandwidth used by the video player last time is selected from the candidate bit rate set, the video bit rate corresponding to the target bandwidth is used as the second target bit rate, and the smallest bit rate between the first target bit rate and the second target bit rate is used as the initial bit rate for the video played back by the video player currently.

For example, assuming that the candidate bit rate set corresponding to the video player is {1Mbps, 2Mbps, 4Mbps}, and that the candidate bandwidth set is {1Mbps, 2Mbps, 4Mbps}, the video bit rate in the playback parameter used by the video player to play back the video last time is 5Mbps, and the download bandwidth is 4Mbps; the first target bit rate which is the closest approximation to and not larger than the video bit rate used by the video player last time selected from the candidate bit rate set is 4Mbps, the target bandwidth which is the closest approximation to and not larger than the download bandwidth used by the video player last time selected from the candidate bandwidth set is 4Mbps, and the second target bit rate corresponding to the target bandwidth of 4Mbps is 4Mbps; and the smallest video bit rate of 4Mbps between the first target bit rate and the second target bit rate is used as the initial bit rate for the video played back by the video player currently.

Manner 3: if the playback parameter includes the video resolution and the bandwidth, the target resolution which is closest to and not larger than the video resolution used by the video player last time is selected from the candidate resolution set, and the video bit rate corresponding to the target resolution is used as the first target bit rate; and the target bandwidth closest to and not larger than the download bandwidth used by the video player last time is selected from the candidate bandwidth set, the video bit rate corresponding to the target bandwidth is used as the second target bit rate, and the smallest bit rate between the first target bit rate and the second target bit rate is used as the initial bit rate for the video played back by the video player currently.

For example, assuming that the candidate resolution set corresponding to the video player is {540p, 720p, 1080p}, and that the candidate bandwidth set is {1Mbps, 2Mbps, 4Mbps}, the video resolution in the playback parameters used by the video player to play back the video last time is 720p, and the download bandwidth is 2Mbps; the target resolution which is the closest approximation to and not larger than the video resolution used by the video player last time selected from the candidate resolution set is 720p, and the video bit rate of 2Mbps corresponding to the target resolution of 720p is used as the first target resolution; the target bandwidth which is the closest approximation to and not larger than the download bandwidth used by the video player last time selected from the candidate bandwidth set is 2Mbps, and the video bit rate of 2Mbps corresponding to the target bandwidth of 2Mbps is used as the second target bit rate; and the smallest video bit rate of 2Mbps between the first target bit rate and the second target bit rate is used as the initial bit rate for the video played back by the video player currently.

Manner 4: if the playback parameters include the video resolution, the video bit rate and the bandwidth, the target resolution, which is closest to and not larger than the video resolution used by the video player last time, is selected from the candidate resolution set, and the video bit rate corresponding to the target resolution is used as the first target bit rate; the second target bit rate which is closest to and not larger than the video bit rate used by the video player last time is selected from the candidate bit rate set; and the target bandwidth which is closest to and not larger than the download bandwidth used by the video player last time is selected from the candidate bandwidth set, the video bit rate corresponding to the target bandwidth is used as a third target bit rate, and the smallest bit rate among the first target bit rate, the second target bit rate and the third target bit rate is used as the initial bit rate for the video played back by the video player currently.

For example, assuming that the candidate bit rate set corresponding to the video player is {1Mbps, 2Mbps, 4Mbps}, that the candidate resolution set is {540p, 720p, 1080p}, and that the candidate bandwidth set is {1Mbps, 2Mbps, 4Mbps}, the video resolution in the playback parameters used by the video player to play back the video last time is 720p, the video bit rate is 2Mbps, and the download bandwidth is 2Mbps; the target resolution which is the closest approximation to and not larger than the video resolution used by the video player last time selected from the candidate resolution set is 720p, and the video bit rate of 2Mbps corresponding to the target resolution of 720p is used as the first target bit rate; the second target bit rate which is the closest approximation to and not larger than the video bit rate used by the video player last time selected from the candidate bit rate set is 2Mbps; the target bandwidth which is the closest approximation to and not larger than the download bandwidth used by the video player last time selected from the candidate bandwidth set is 2Mbps, and the video bit rate as the third target bit rate corresponding to the target bandwidth of 2Mbps is 2Mbps; and the smallest bit rate of 2Mbps among the first target bit rate, the second target bit rate and the third target bit rate is used as the initial bit rate for the video played back by the video player currently.

In one possible implementation, before determining the target bit rate according to the video playback parameter used by the video player to play back the video last time, it further needs to be judged whether the video playback parameter used by the video player to play back the video last time is valid, and only when the video playback parameter is valid can they be used for determining the initial bit rate for the video played back currently. It is judged that the video playback parameter used by the video player to play back the video last time through the following manner:
determining that an update duration of the video playback parameter used by the video player to play back the video last time is not larger than a preset threshold. The update duration is a duration between a current moment and a moment at which the video player stops using the video playback parameter to play back the video last time.

In one possible implementation, the moment when the video player stops using the video playback parameter to play back the video last time may be update time corresponding to the video playback parameter; and before determining the target bit rate according to the video playback parameters used by the video player to play back the video last time, the update time in the video playback parameter and the current moment are obtained, a time difference between the current moment and the update time is calculated, and the time difference is used as the update duration. When the update duration is not larger than the preset threshold, the target bit rate is determined according to the video playback parameter used by the video player to play back the video last time.

It should be noted that, in the embodiments of the present disclosure, when the video player exits video playback, the video playback parameter used to play back the video last time stored in the data sheet is updated according to the video playback parameter used upon exiting video playback.

For example, the update time in the playback parameter used by the video player to play back the video last time is 20190825, the current moment is 20190827, and the update duration is 2 days.

In one possible implementation, if the update duration corresponding to the video playback parameters used by the video player to play back the video last time is larger than the preset threshold, a preset bit rate is used as the initial bit rate for the video played back by the video player currently.

When the update duration is larger than the preset threshold, it means that the playback parameter used to play back the video last time corresponding to the update duration is expired and have no reference significance to determining the initial bit rate, so the preset bit rate is used as the initial bit rate for the video played back currently.

For example, when the update duration is 5 days, and the preset threshold is 3 days, the playback parameter for used to play back the video last time is invalid, so the preset bit rate of 2Mbps, for example, is used as the initial bit rate for the video played back currently.

A method for selecting the initial bit rate is described below in some examples.

### I. To take the video playback parameter including the video bit rate as an example.

FIG. 2 is a flow chart of a method for determining an initial bit rate illustrated according to an exemplary embodiment. The method includes the following steps.

In S201, obtaining, when it is detected that the video player starts video playback, a video bit rate used by the video player to play back the video last time corresponding to a current network type.

For example, the current network type is Wi-Fi, and the video bit rate used by the video player to play back the video last time when the network type is Wi-Fi is obtained from local storage, assuming that the video bit rate is 2Mbps.

In S202, calculating an update duration corresponding to the obtained video bit rate.

For example, the current time is 20190802, the update time corresponding to the video bit rate used to play back the video last time is 20190731, and the update duration corresponding to the obtained video bit rate is calculated to be 2 days.

In S203, determining whether the update duration corresponding to the obtained video bit rate is larger than a preset threshold; if yes, step S204 is executed; and if no, step S205 is executed.

In S204, determining that the video bit rate is expired, and using a preset bit rate as the initial bit rate.

In S205, determining that a candidate bit rate set corresponding to the current network type, and selecting a bit rate which is closest to and not larger than the video bit rate used by the video player last time from the candidate bit rate set as the target bit rate.

In S206, using the target bit rate as the initial bit rate for the video played back by the video player currently.

Assuming that the preset threshold is 3 days, when the update duration corresponding to the obtained video bit rate is 2 days, it is determined that the video bit rate used by the video player to play back the video last time is valid; and the candidate bit rate set corresponding to the video player is {1Mbps, 2Mbps, 4Mbps}. The video bit rate used by the video player to play back the video last time under the Wi-Fi network is 2Mbps, and the video bit rate of 2Mbps is selected as the initial bit rate.

### II. To take the video playback parameters including the video resolution as an example.

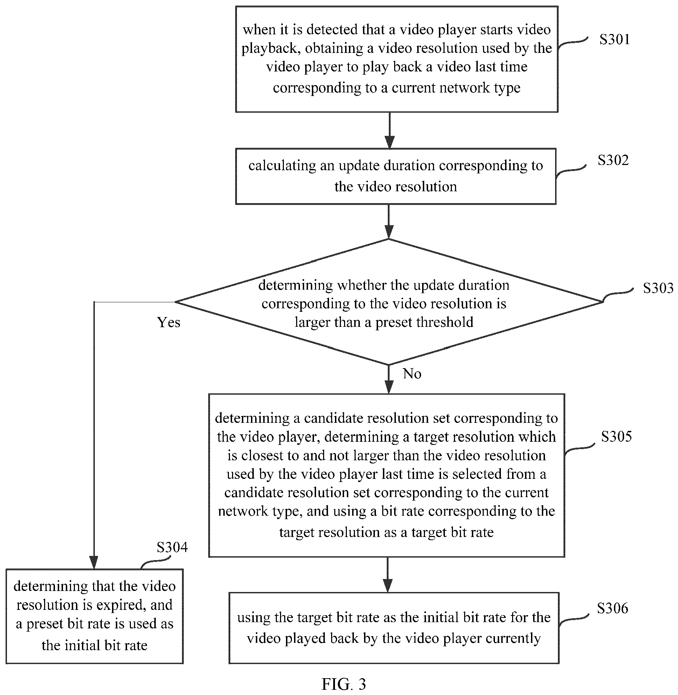

FIG. 3 is a flow chart of a method for determining an initial bit rate illustrated according to an exemplary embodiment. The method includes the following steps.

In S301, when it is detected that a video player starts video playback, obtaining a video resolution used by the video player to play back a video last time corresponding to a current network type.

For example, the obtained current network type is 4G, and the video resolution used by the video player to play back the video last time when the network type is 4G is obtained from local storage, assuming that the video resolution is 1080p.

In S302, calculating an update duration corresponding to the video resolution.

For example, the current time is 20190802, the update time corresponding to the video bit rate used to play back the video last time is 20190801, and the update duration corresponding to the obtained video resolution is calculated to be 1 day.

In step S303, determining whether the update duration corresponding to the video resolution is larger than a preset threshold; if yes, step S304 is executed; and if no, step S305 is executed.

In S304, determining that the video resolution is expired, and a preset bit rate is used as the initial bit rate.

In S305, determining a candidate resolution set corresponding to the video player, determining a target resolution which is closest to and not larger than the video resolution used by the video player last time is selected from a candidate resolution set corresponding to the current network type, and using a bit rate corresponding to the target resolution as a target bit rate.

In S306, using the target bit rate as the initial bit rate for the video played back by the video player currently.

Assuming that the preset threshold is 3 days, when the update duration corresponding to the obtained video resolution is 1 day, it is determined that the video resolution used by the video player to play back the video last time is valid; and the candidate resolution set corresponding to the video player is {540p, 720p, 1080p}. The video resolution used by the video player to play back the video last time under the 4G network is 1080p, the target resolution not larger than the video resolution used by the video player last time selected from the candidate resolution set is 1080p, the bit rate of 4Mbps corresponding to the target resolution of 1080p is used as the target bit rate, and the video bit rate of 4Mbps is selected as the initial bit rate.

### III. To take the video playback parameters including the download bandwidth as an example.

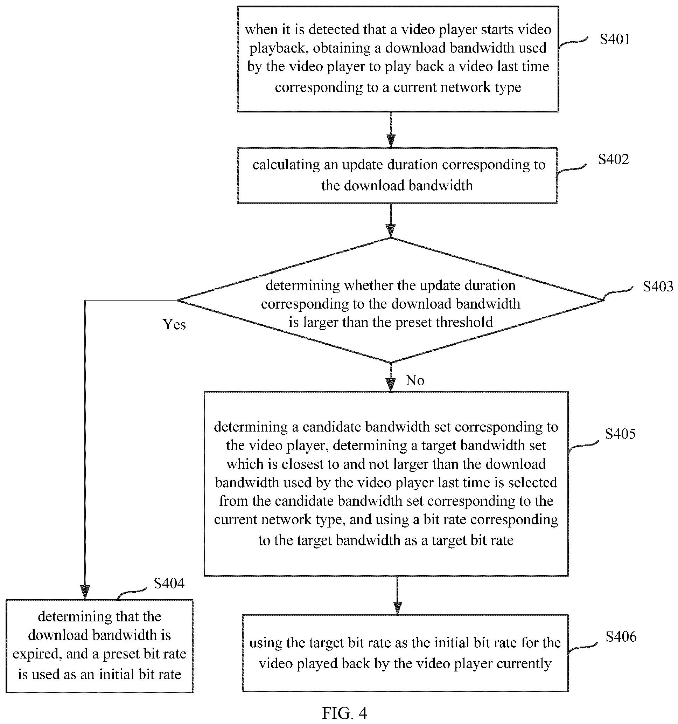

FIG. 4 is a flow chart of a method for determining an initial bit rate illustrated according to an exemplary embodiment. The method includes the following steps.

In S401, when it is detected that a video player starts video playback, obtaining a download bandwidth used by the video player to play back a video last time corresponding to a current network type.

For example, the obtained current network type is 3G, and the download bandwidth used by the video player to play back the video last time when the network type is 3G is obtained from local storage, assuming that the download bandwidth is 1Mbps.

In S402, calculating an update duration corresponding to the download bandwidth.

For example, the current time is 20190802, the update time corresponding to the download bandwidth used to play back the video last time is 20190730, and the update duration corresponding to the obtained download bandwidth is calculated to be 2 days.

In S403, determining whether the update duration corresponding to the download bandwidth is larger than the preset threshold; if yes, step S404 is executed; and if no, step S405 is executed.

In S404, determining that the download bandwidth is expired, and a preset bit rate is used as an initial bit rate.

In S405, determining a candidate bandwidth set corresponding to the video player, determining a target bandwidth set which is closest to and not larger than the download bandwidth used by the video player last time is selected from the candidate bandwidth set corresponding to the current network type, and using a bit rate corresponding to the target bandwidth as a target bit rate.

In S406, using the target bit rate as the initial bit rate for the video played back by the video player currently.

Assuming that the preset threshold is 3 days, when the update duration corresponding to the obtained bandwidth is 2 days, it is determined that the video bandwidth used by the video player to play back the video last time is valid; and the candidate bandwidth set corresponding to the video player is {1Mbps, 2Mbps, 4Mbps}. The download bandwidth used by the video player to play back the video last time under the 3G network is 1Mbps, the target bandwidth closest to and not larger than the download bandwidth used by the video player to play back the video last time selected from the candidate bandwidth set is 1Mbps, the bit rate of 1Mbps corresponding to the target bandwidth of 1Mbps is used as the target bit rate, and the video bit rate of 1Mbps is selected as the initial bit rate.

### IV. To take the video playback parameters including the video bit rate and the video resolution as an example.

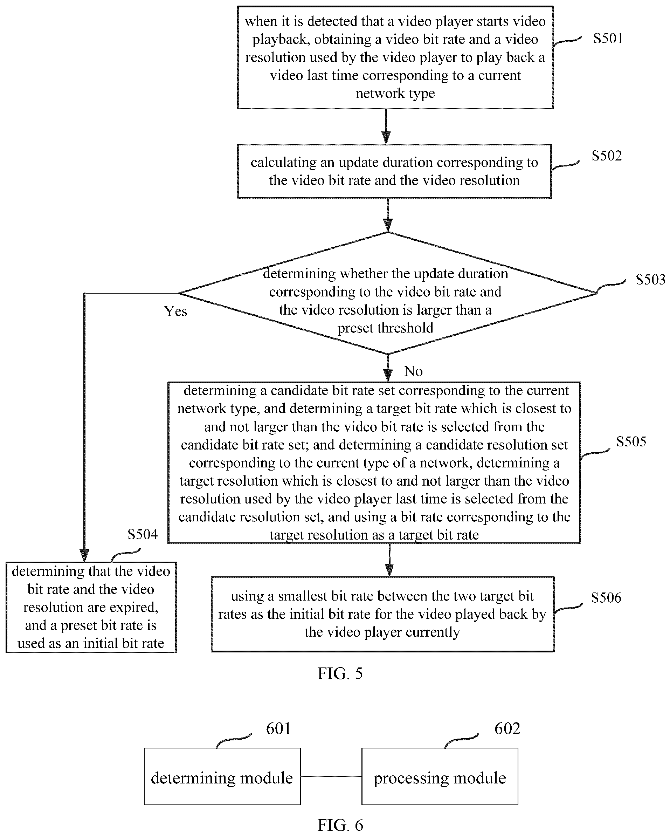

FIG. 5 is a flow chart of a method for determining an initial bit rate illustrated according to an exemplary embodiment. The method includes the following steps.

In S501, when it is detected that a video player starts video playback, obtaining a video bit rate and a video resolution used by the video player to play back a video last time corresponding to a current network type.

For example, the obtained current network type is Wi-Fi, the video bit rate used by the video player to play back the video last time when the network type is Wi-Fi obtained from local storage is 2Mbps, and the video resolution is 720p.

In S502, calculating an update duration corresponding to the video bit rate and the video resolution.

For example, the current time is 20190802, the update time corresponding to the video bit rate and the video resolution used to play back the video last time is 20190801, and the update duration corresponding to the obtained video bit rate and video resolution is calculated to be 1 day.

In S503, determining whether the update duration corresponding to the video bit rate and the video resolution is larger than a preset threshold; if yes, step S504 is executed; and if no, step S505 is executed.

In S504, determining that the video bit rate and the video resolution are expired, and a preset bit rate is used as an initial bit rate.

In S505, determining a candidate bit rate set corresponding to the current network type, and determining a target bit rate which is closest to and not larger than the video bit rate is selected from the candidate bit rate set; and determining a candidate resolution set corresponding to the current type of a network, determining a target resolution which is closest to and not larger than the video resolution used by the video player last time is selected from the candidate resolution set, and using a bit rate corresponding to the target resolution as a target bit rate.

In S506, using a smallest bit rate between the two target bit rates as the initial bit rate for the video played back by the video player currently.

Assuming that the preset threshold is 3 days, when the update duration corresponding to the obtained video bit rate is 1 day, it is determined that the video bit rate and the video resolution used by the video player to play back the video last time are valid; the candidate bit rate set corresponding to the video player is {1Mbps, 2Mbps, 4Mbps}, the candidate resolution set is determined to be {540p, 720p, 1080p} according to a relationship between the bit rate and the resolution, the video bit rate used by the video player to play back the video last time under the Wi-Fi network is 2Mbps, and the first target bit rate determined according to the video bit rate is 2Mbps; and the video resolution used by the video player to play back the video last time under the Wi-Fi network is 720p, the target bit rate is determined to be 720p, the second bit rate corresponding to the target resolution of 720p is 2Mbps, and the smallest bit rate of 2Mbps between the two determined target bit rates is used as the initial bit rate for the video played back by the video player currently.

FIG. 6 is a block diagram of an apparatus for determining an initial bit rate illustrated according to an exemplary embodiment. With reference to FIG. 6, the apparatus includes a determining module 601 and a processing module 602.

The determining module 601 is configured to determine, in a condition that a video player starts playback, a target bit rate according to video playback parameter used by the video player to play back a video last time.

The processing module 602 is configured to determine the target bit rate as an initial bit rate for a video played back by the video player currently.

In one possible implementation, before the determining module 601 determines the target bit rate according to the video playback parameter used by the video player to play back the video last time, the determining module 601 is further configured to determine, according to a type of a network currently accessed, a target playback parameter used by the video player during a process in which the video player plays the video last time in a condition that the network is accessed, and determine the target playback parameter as the video playback parameters used by the video player to play back the video last time.

The target playback parameters include at least one type of playback parameters among a video bit rate, a video resolution, and a download bandwidth.

In one possible implementation, the determining module 601 is configured to:
in response to that the playback parameter used by the video player to play back the video last time is not changed, determine the playback parameter used by the video player to play back the video last time as the target playback parameter; or
in response to that the playback parameter used by the video player to play back the video last time is changed, determine a duration that each playback parameter is used by the video player to play the video last time, and determine a playback parameter with a longest duration as the target playback parameter, or determine a playback parameter used by the video player upon exiting the video played back last time as the target playback parameter.

In one possible implementation, the determining module 601 is configured to determine, in response to that the video playback parameter includes one type of playback parameter, a candidate parameter set corresponding to the playback parameter according to the type of the playback parameter; and select target parameter which is closest to and not larger than the playback parameter from the candidate parameter set, and determine the target bit rate according to the target parameter.

In a condition that the video playback parameter includes the video bit rate, the candidate parameter set is a candidate bit rate set; or in a condition that the video playback parameter includes the video resolution, the candidate parameter set is a candidate resolution set; or in a condition that the video playback parameter includes the download bandwidth, the candidate parameter set is a candidate bandwidth set.

In one possible implementation, the determining module 601 is configured to in a condition that the video playback parameter includes at least two types of playback parameters, for each type of playback parameter, determine a candidate parameter set corresponding to the playback parameter according to the type of the playback parameter, and select a target parameter which is closest to and not larger than the playback parameter from the candidate parameter set corresponding to the playback parameter, and determine the target bit rate according to the target parameter.

The determining the target bit rate as the initial bit rate for the video played back by the video player currently includes:
determining a smallest bit rate in at least two target bit rates as the initial bit rate for the video played back by the video player currently;
in a condition that the video playback parameter includes the video bit rate, the candidate parameter set is a candidate bit rate set; or in a condition that the video playback parameter includes the video resolution, the candidate parameter set is a candidate resolution set; or in a condition that the video playback parameter includes the download bandwidth, the candidate parameter set is a candidate bandwidth set.

In one possible implementation, the determining module 601 is configured to determine, in response to that the target parameter includes the video bit rate, the video bit rate as the target bit rate; determine, in response to that the target parameter includes the video resolution, a video bit rate corresponding to the video resolution according to a correspondence relationship between bit rates and resolutions, and determine the video bit rate as the target bit rate; and determine, in response to that the target parameter includes the download bandwidth, a video bit rate corresponding to the download bandwidth according to a correspondence relationship between bit rates and bandwidths, and determine the determined video bit rate as the target bit rate.

In one possible implementation, before the determining module 601 determines the target bit rate according to the video playback parameters used by the video player to play back the video last time, the determining module is configured to detect whether an update duration of the video playback parameter used by the video player to play back the video last time is larger than a preset threshold, and in response to that the update duration is not larger than the preset threshold, determine the target bit rate according to the video playback parameter used by the video player to play back the video last time. The update duration is a duration between a current moment and a moment at which the video player stops using the video playback parameter to play back the video last time.

In one possible implementation, the determining module 601 is further configured to use, in response to that the update duration of the video playback parameter used by the video player to play back the video last time is larger than the preset threshold, a preset bit rate as the initial bit rate for the video played back by the video player currently.

Regarding the apparatus in the above-mentioned embodiment, a specific manner in which each unit executes a request has been described in detail in the embodiment of the method, and will not be described in detail here.

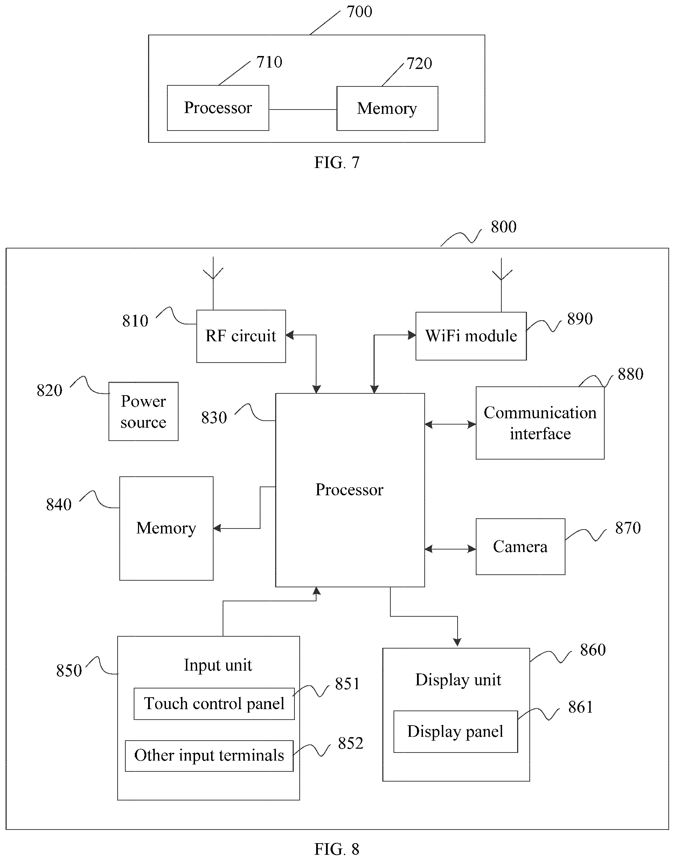

FIG. 7 is a block diagram of an electronic device 700 for initial bit rate determining illustrated according to an exemplary embodiment. The electronic device includes:
a processor 710; and
a memory 720 configured to store an instruction executable by the processor 710.

The processor 710 is configured to execute the instruction to cause the electronic device to determine, in a condition that a video player starts playback, a target bit rate according to a video playback parameter used by the video player to play back a video last time; and determine the target bit rate as an initial bit rate for a video played back by the video player currently.

It should be noted that the video playback parameter includes at least one type of playback parameters among a video bit rate, a video resolution, and a download bandwidth.

In one possible implementation, before the processor 710 determines the target bit rate according to the video playback parameter used by the video player to play back the video last time, the processor is further configured to determine, according to a type of the network currently accessed, a target playback parameter used by the video player during a process in which the video player plays the video last time in a condition that the a network is accessed; and use the target playback parameter as the video playback parameter used by the video player to play back the video last time.

The target playback parameter includes at least one type of playback parameter among the video bit rate, the video resolution, and the download bandwidth.

In one possible implementation, the processor 710 is configured to:
in response to that the playback parameter used by the video player during a process in which the video player plays the video last time is not changed, determine the playback parameter used by the video player to play back the video last time as the target playback parameter; or
in response to that the playback parameter used by the video player during a process in which the video player plays the video last time is changed, determine a duration that each playback parameter is used by the video player to play back the video last time, and use a playback parameter with a longest duration as the target playback parameter, or use a playback parameter used by the video player upon exiting the video played back last time as the target playback parameter.

In one possible implementation, the processor 710 is configured to in response that the video playback parameter includes one type of playback parameter, determine a candidate parameter set corresponding to the playback parameter according to the type of the playback parameter; and select a target parameter, which is closest to and not larger than the playback parameter, from the candidate parameter set, and determine the target bit rate according to the target parameter;
in a condition that the video playback parameter includes the video bit rate, the candidate parameter set is a candidate bit rate set; or in a condition that the video playback parameter includes the video resolution, the candidate parameter set is a candidate resolution set; or in a condition that the video playback parameter includes the download bandwidth, the candidate parameter set is a candidate bandwidth set.

In one possible implementation, the processor 710 is configured to: determine, in a condition that the video playback parameter includes at least two types of playback parameter, a candidate parameter set corresponding to the playback parameter according to a type of any type of playback parameter of the two types of playback parameter; and select a target parameter which is closest to and not larger than the playback parameter from the candidate parameter set corresponding to the playback parameter, and determine the target bit rate according to the target parameter.

The determining the target bit rate as the initial bit rate for the video played back by the video player currently includes:
determining a smallest bit rate in at least two target bit rates as the initial bit rate for the video played back by the video player currently;
in a condition that the video playback parameter includes the video bit rate, the candidate parameter set is a candidate bit rate set; or in a condition that the video playback parameter includes the video resolution, the candidate parameter set is a candidate resolution set; or in a condition that the video playback parameter includes the download bandwidth, the candidate parameter set is a candidate bandwidth set.

In one possible implementation, the processor 710 is configured to: use, in response to that the target parameter includes the video bit rate, the video bit rate as the target bit rate;
determine, in response to that the target parameter includes the video resolution, a video bit rate corresponding to the video resolution according to a correspondence relationship between bit rates and resolutions, and use the video bit rate as the target bit rate; and
determine, in response to that the target parameter includes the download bandwidth, a video bit rate corresponding to the download bandwidth according to a correspondence relationship between bit rates and bandwidths, and use the video bit rate as the target bit rate.

In one possible implementation, before the processor 710 determines the target bit rate according to the video playback parameter used by the video player to play back the video last time, the processor 710 is configured to: detect whether an update duration of the video playback parameter used by the video player to play back the video last time is larger than a preset threshold; and determine the target bit rate according to the video playback parameters used by the video player to play back the video last time in response to that the update duration is not larger than the preset threshold. The update duration is a duration between a current moment and a moment at which the video player stops using the playback parameters to play back the video last time.

In one possible implementation, the processor 710 is further configured to execute use, in response to that the update duration of the video playback parameter used by the video player to play back the video last time is larger than the preset threshold, a preset bit rate as the initial bit rate for the video played back by the video player currently.

Regarding the device in the above-mentioned embodiments, a manner in which the processor 710 executes a request has been described in detail in the embodiments of the method, and will not be described in detail here.

In an exemplary embodiment, a non-volatile storage medium including instructions is further provided, such as a memory 720 including the instructions. The above instructions may be executed by a processor 710 of an electronic device 700 to complete the above method. Optionally, the storage medium may be a non-transitory computer-readable storage medium. For example, the non-transitory computer-readable storage medium may be a ROM, a random access memory (RAM), a CD-ROM, a magnetic tape, a floppy disk, an optical data storage device, etc.

The video player in the embodiments of the present disclosure may be located in a terminal. As shown in FIG. 8, an embodiment of the present disclosure provides a terminal 800 for running a video player, including: a radio frequency (RF) circuit 810, a power supply 820, a processor 830, a memory 840, an input unit 850, a display unit 860, a camera 870, a communication interface 880, and a wireless fidelity (WiFi) module 890 and other components. Those of skill in the art may understand that a structure of the terminal shown in FIG. 8 does not constitute a limitation on the terminal. The terminal provided by the embodiment of the present disclosure may include more or less components than as shown in the drawing, or combine some components, or include different arrangements of components.

In the embodiments of the present disclosure, the terminal 800 can implement a communication service and send information to other contacts, so the terminal 800 needs to have a data transmission function, that is, the terminal 800 needs to include a communication module. Although FIG. 8 shows communication modules such as the RF circuit 810, the WiFi module 890, and the communication interface 880, it can be understood that at least one of the above components or other communication modules (such as a Bluetooth module) exist in the terminal 800 for data transmission.

For example, when the terminal 800 is a mobile phone, the terminal 800 may include the RF circuit 810, and may also include the WiFi module 890; when the terminal 800 is a computer, the terminal 800 may include the communication interface 880, and may also include the WiFi module 890; and when the terminal 800 is a tablet computer, the terminal 800 may include the WiFi module.

The memory 840 may be configured to store software programs and modules. The processor 830 executes various functional applications and data processing of the terminal 800 by running the software programs and modules stored in the memory 840. After the processor 830 executes a program code in the memory 840, a part or all processes in FIG. 1 to FIG. 5 of the embodiment of the present disclosure may be realized.

Optionally, the memory 840 may mainly include a storage program region and a storage data region. The storage program region may store an operation system, various application programs (such as communication applications) and various modules for WLAN connection, etc.; and the storage data region may store data created according to use of the terminal, and the like.

Further, the memory 840 may include a high speed random access memory, and may also include a non-volatile memory, such as at least one magnetic disk storage device, a flash memory device, or other volatile solid-state storage devices.

The input unit 850 may be configured to receive numeric or character information input by a user, and generate key signal input related to user settings and function control of the terminal 800.

Optionally, the input unit 850 may include a touch panel 851 and other input terminals 852.

The touch panel 851, also referred to as a touch screen, may collect the user's touch operation on or near it (for example, an operation by the user using a finger, a stylus, or any other suitable object or accessory on the touch panel 851 or near the touch panel 851), and drive a corresponding connection apparatus according to a preset program. Optionally, the touch panel 851 may include two parts, namely a touch detection apparatus and a touch controller. The touch detection apparatus detects the user's touch orientation, detects a signal brought by the touch operation, and transmits the signal to the touch controller; the touch controller receives touch information from the touch detection apparatus, converts it into contact coordinates, then sends the contact coordinates to the processor 830, and can receive and execute a command sent by the processor 830. In addition, the touch panel 851 may be implemented in various types such as resistive, capacitive, infrared, and surface acoustic waves.

Optionally, other input terminals 852 may include, but are not limited to, one or more of a physical keyboard, function keys (such as volume control keys, switch keys, etc.), a trackball, a mouse, a joystick, and the like.

The display unit 860 may be configured to display information input by the user or information provided for the user and various menus of the terminal 800. The display unit 860 is a display system of the terminal 800, and is used for presenting an interface and realizing humancomputer interaction.

The display unit 860 may include a display panel 861. Optionally, the display panel 861 may be configured in a form of a liquid crystal display (LCD), an organic light-emitting diode (OLED) or the like.

Further, the touch panel 851 may cover the display panel 861, and when the touch panel 851 detects a touch operation on or near it, the operation is transmitted to the processor 830 to determine a type of a touch event. Then the processor 830 provides a corresponding visual output on display panel 861 according to the type of the touch event.

Although in FIG. 8, the touch panel 851 and the display panel 861 are used as two independent components to realize input and output functions of the terminal 800, in some embodiments, the touch panel 851 and the display panel 861 are integrated to realize the input and output functions of the terminal 800.

The processor 830 is a control center of the terminal 800, and uses various interfaces and lines to connect various components. By running or executing the software programs and/or modules stored in the memory 840, and calling data stored in the memory 840, the processor 830 executes various functions of the terminal 800 and process data, thereby realizing various services based on the terminal.

Optionally, the processor 830 may include one or more processing units. Optionally, the processor 830 may integrate an application processor and a modem processor. The application processor mainly processes the operation system, a user interface, the application programs, and the like, and the modem processor mainly processes wireless communication. It can be understood that, the above-mentioned modem processor may be not integrated into the processor 830.

The camera 870 is configured to realize a shooting function of the terminal 800, and to shoot pictures or videos.

The terminal 800 also includes a power supply 820 (such as a battery) for powering various components. Optionally, the power supply 820 may be logically connected to the processor 830 through a power management system, so as to implement functions such as managing charging, discharging, and power consumption through the power management system.

Although not shown, the terminal 800 may also include at least one sensor, an audio circuit, etc., which will not be repeated here.

The embodiments of the present disclosure further provide a computer program product. When the computer program product runs on an electronic device, the electronic device can realize any method for determining an initial bit rate according to the above embodiments of the present disclosure or any method that may be related to the any method for determining initial bit rate.

After considering the specification and practicing the present invention disclosed herein, those of skill in the art will easily think of other implementation solutions of the present disclosure. The present disclosure is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The specification and the embodiments are merely exemplary, and the true scope and spirit of the present disclosure are indicated by the appended claims. It should be understood that the present disclosure is not limited to the precise structure that has been described above and shown in the drawings, and various modifications and changes can be made without departing from its scope. The scope of the present disclosure is only limited by the appended claims.

## Claims

1. A method for determining an initial bit rate, comprising:
determining, in a condition that a video player starts playback, a target bit rate according to a video playback parameter used by the video player to play a video last time; and
determining the target bit rate as an initial bit rate for a video played back by the video player currently;
wherein the video playback parameter comprises at least one type of playback parameter among a video bit rate, a video resolution, and a download bandwidth.

2. The method according to claim 1, wherein before said determining the target bit rate according to the video playback parameter used by the video player to play the video last time, the method further comprises:
determining, according to a type of a network currently accessed, a target playback parameter used by the video player during a process in which the video player plays the video last time in a condition that the network is accessed; and
determining the target playback parameter as the video playback parameter used by the video player to play back the video last time;
wherein the target playback parameter comprises at least one type of playback parameter among the video bit rate, the video resolution, and the download bandwidth.

3. The method according to claim 2, wherein said determining, according to the type of the network currently accessed, the target playback parameter used by the video player during a process in which the video player plays the video last time in the condition that the network is accessed comprises:
in response to that a playback parameter used by the video player during the process in which the video player plays the video last time is not changed, determining the playback parameter used by the video player to play back the video last time as the target playback parameter; or
in response to that the playback parameter used by the video player during the process in which the video player plays the video last time is changed, determining a duration that each playback parameter is used by the video player to play back the video last time, and determining a playback parameter with a longest duration as the target playback parameter, or determining a playback parameter used by the video player upon exiting the video played back last time as the target playback parameter.

4. The method according to claim 1, wherein said determining the target bit rate according to the video playback parameter used by the video player to play the video last time comprises:
determining, in response to that the video playback parameter comprises one type of playback parameter, a candidate parameter set corresponding to the playback parameter according to the type of playback parameter; and
selecting a target parameter, which is closest to and not larger than the playback parameter, from the candidate parameter set, and determining the target bit rate according to the target parameter;
wherein in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

5. The method according to claim 1, wherein said determining the target bit rate according to the video playback parameter used by the video player to play the video last time comprises:
in a condition that the video playback parameter comprises at least two types of playback parameter, for each type of playback parameter, determining a candidate parameter set corresponding to the playback parameter according to the type of the playback parameter; and
selecting a target parameter, which is closest to and not larger than the video playback parameter, from the candidate parameter set corresponding to the playback parameter, and determining the target bit rate according to the target parameter;
wherein said determining the target bit rate as the initial bit rate for the video played back by the video player currently comprises:
determining a smallest bit rate in at least two target bit rates as the initial bit rate for the video played back by the video player currently; wherein
in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

6. The method according to claim 4 or 5, wherein said determining the target bit rate according to the target parameter comprises:
determining, in response to that the target parameter comprises the video bit rate, the video bit rate as the target bit rate;
determining, in response to that the target parameter comprises the video resolution, a video bit rate corresponding to the video resolution according to a correspondence relationship between bit rates and resolutions, and determining the video bit rate as the target bit rate; and
determining, in response to that the target parameter comprises the download bandwidth, a video bit rate corresponding to the download bandwidth according to a correspondence relationship between bit rates and bandwidths, and determining the video bit rate as the target bit rate.

7. The method according to claim 1, wherein before said determining the target bit rate according to the video playback parameter used by the video player to play the video last time, the method further comprises:
detecting whether an update duration of the video playback parameter used by the video player to play back the video last time is larger than a preset threshold; and
determining the target bit rate according to the video playback parameter used by the video player to play back the video last time in response to that the update duration is not larger than the preset threshold;
wherein the update duration is a duration between a current moment and a moment at which the video player stops using the video playback parameter to play back the video last time.

8. The method according to claim 7, further comprising:
determining, in response to that the update duration of the video playback parameter used by the video player to play back the video last time is larger than the preset threshold, a preset bit rate as the initial bit rate for the video played back by the video player currently.

9. An apparatus for determining initial bit rate, comprising:
a first determining module configured to determine, in a condition that a video player starts playback, a target bit rate according to a video playback parameter used by the video player to play a video last time; and
a processing module configured to determine the target bit rate as an initial bit rate for a video played back by the video player currently.

10. The apparatus according to claim 9, wherein before the first determining module determines the target bit rate according to the video playback parameter used by the video player to play the video last time, the determining module is further configured to:
determine, according to a type of a network currently accessed, a target playback parameter used by the video player during a process in which the video player plays the video last time in a condition that the network is accessed, and determine the target playback parameter as the video playback parameters used by the video player to play back the video last time;
wherein the target playback parameter comprises at least one type of playback parameters among a video bit rate, a video resolution, and a download bandwidth.

11. The apparatus according to claim 10, wherein the determining module is configured to:
in response to that a playback parameter used by the video player during the process in which the video player plays the video last time is not changed, determine the playback parameter used by the video player to play back the video last time as the target playback parameter; or
in response to that the playback parameter used by the video player during the process in which the video player plays the video last time is changed, determine a duration that each playback parameter is used by the video player to play the video last time, and determine a playback parameter with a longest duration as the target playback parameter, or determine a playback parameter used by the video player upon exiting the video played back last time as the target playback parameter.

12. The apparatus according to claim 9, wherein the determining module is configured to execute:
determine, in response to that the video playback parameter comprises one type of playback parameter, a candidate parameter set corresponding to the playback parameter according to the type of the playback parameter; and
select a target parameter, which is closest to and not larger than the playback parameter, from the candidate parameter set, and determine the target bit rate according to the target parameter;
wherein in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

13. The apparatus according to claim 9, wherein the determining module is configured to:
in a condition that the video playback parameter comprises at least two types of playback parameter, for each type of playback parameter, determine a candidate parameter set corresponding to the playback parameter according to the type of the playback parameter, and
select a target parameter, which is closest to and not larger than the playback parameter, from the candidate parameter set corresponding to the playback parameter, and determine the target bit rate according to the target parameter;
wherein said determining the target bit rate as the initial bit rate for the video played back by the video player currently comprises:
determining a smallest bit rate in at least two target bit rates as the initial bit rate for the video played back by the video player currently; wherein
in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

14. The apparatus according to claim 12 or 13, wherein the determining module is configured to:
determine, in response to that the target parameter comprises the video bit rate, the video bit rate as the target bit rate;
determine, in response to that the target parameter comprises the video resolution, a video bit rate corresponding to the video resolution according to a correspondence relationship between bit rates and resolutions, and determine the video bit rate as the target bit rate; and
determine, in response to that the target parameter comprises the download bandwidth, a video bit rate corresponding to the download bandwidth according to a correspondence relationship between bit rates and bandwidths, and determine the video bit rate as the target bit rate.

15. The apparatus according to claim 9, wherein before the determining module determines the target bit rate according to the video playback parameters used by the video player to play the video last time, the determining module is configured to:
detect whether an update duration of the video playback parameter used by the video player to play back the video last time is larger than a preset threshold, and
determine the target bit rate according to the video playback parameter used by the video player to play back the video last time in response to that the update duration is not larger than the preset threshold;
wherein the update duration is a duration between a current moment and a moment at which the video player stops using the video playback parameter to play back the video last time.

16. The apparatus according to claim 15, the determining module is further configured to:
determine, in response to that the update duration of the video playback parameter used by the video player to play back the video last time is larger than the preset threshold, a preset bit rate as the initial bit rate for the video played back by the video player currently.

17. An electronic device, comprising:
a processor; and
a memory configured to store an instruction executable by the processor; wherein
the processor is configured to execute the instruction to cause the electronic device to:
determine, in a condition that a video player starts playback, a target bit rate according to a video playback parameter used by the video player to play a video last time; and
determine the target bit rate as an initial bit rate for a video played back by the video player currently;
wherein the video playback parameter comprises at least one type of playback parameter among a video bit rate, a video resolution, and a download bandwidth.

18. The electronic device according to claim 17, wherein before the processor determines the target bit rate according to the video playback parameter used by the video player to play the video last time, the processor is further configured to:
determine, according to a type of a network currently accessed, a target playback parameter used by the video player during a process in which the video player plays the video last time in a condition that the network is accessed; and
determine the target playback parameter as the video playback parameter used by the video player to play back the video last time;
wherein the target playback parameter comprises at least one type of playback parameter among the video bit rate, the video resolution, and the download bandwidth.

19. The electronic device according to claim 18, wherein the processor is configured to:
in response to that a playback parameter used by the video player during a process in which the video player plays the video last time is not changed, determine the playback parameter used by the video player to play back the video last time as the target playback parameter; or
in response to that the playback parameter used by the video player during a process in which the video player plays the video last time is changed, determine a duration that each playback parameter is used by the video player to play back the video last time, and determine a playback parameter with a longest duration as the target playback parameter, or determine a playback parameter used by the video player upon exiting the video played back last time as the target playback parameter.

20. The electronic device according to claim 17, wherein the processor is configured to:
determine, in response that the video playback parameter comprises one type of playback parameter, a candidate parameter set corresponding to the playback parameter according to the type of the playback parameter; and
select a target parameter, which is closest to and not larger than the playback parameter, from the candidate parameter set, and determine the target bit rate according to the target parameter;
wherein in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

21. The electronic device according to claim 17, wherein the processor is configured to:
in a condition that the video playback parameter comprises at least two types of playback parameter, for each type of playback parameter, determine a candidate parameter set corresponding to the playback parameter according to the type of the playback parameter; and
select a target parameter, which is closest to and not larger than the playback parameter, from the candidate parameter set corresponding to the playback parameter, and determine the target bit rate according to the target parameter;
wherein said determining the target bit rate as the initial bit rate for the video played back by the video player currently comprises:
determining a smallest bit rate in at least two target bit rates as the initial bit rate for the video played back by the video player currently; wherein
in a condition that the video playback parameter comprises the video bit rate, the candidate parameter set is a candidate bit rate set; or in a condition that the video playback parameter comprises the video resolution, the candidate parameter set is a candidate resolution set; or in a condition that the video playback parameter comprises the download bandwidth, the candidate parameter set is a candidate bandwidth set.

22. The electronic device according to claim 20 or 21, wherein the processor is configured to:
determine, in response to that the target parameter comprises the video bit rate, the video bit rate as the target bit rate;
determine, in response to that the target parameter comprises the video resolution, a video bit rate corresponding to the video resolution according to a correspondence relationship between bit rates and resolutions, and determine the video bit rate as the target bit rate; and
determine, in response to that the target parameter comprises the download bandwidth, a video bit rate corresponding to the download bandwidth according to a correspondence relationship between bit rates and bandwidths, and determine the video bit rate as the target bit rate.

23. The electronic device according to claim 17, wherein before the processor determines the target bit rate according to the video playback parameter used by the video player to play the video last time, the processor is configured to:
detect whether an update duration of the video playback parameter used by the video player to play back the video last time is larger than a preset threshold; and
determine the target bit rate according to the video playback parameters used by the video player to play back the video last time in response to that the update duration is not larger than the preset threshold;
wherein the update duration is a duration between a current moment and a moment at which the video player stops using the video playback parameter to play back the video last time.

24. The electronic device according to claim 23, wherein the processor is further configured to:
determine, in response to that the update duration of the video playback parameter used by the video player to play back the video last time is larger than the preset threshold, a preset bit rate as the initial bit rate for the video played back by the video player currently.

25. A computer storage medium, wherein when an instruction in the storage medium is executed by a processor of an electronic device for determining an initial bit rate, the electronic device executes the method according to any one of claims 1 to 8.
